# FASCICULE DE BREVET EUROPEEN

(11) **EP 3 318 430 B1**
(45) Date de publication et mention de la délivrance du brevet: **17.06.2020**
(21) Numéro de dépôt: 17200241.2
(22) Date de dépôt: 07.11.2017
(51) Int. Cl.: B60G 3/01, B60G 3/02, B60G 3/12, B62D 49/06, B60G 3/20

(54) **TRACTEUR ENJAMBEUR**
STELZENTRAKTOR
HIGH-CLEARANCE TRACTOR

(30) Priorité: 07.11.2016 FR 1660730
(43) Date de publication de la demande: 09.05.2018
(73) Titulaire: Vermande (SA), 47320 Clairac (FR)
(72) Inventeur: VERMANDE, Jean-Luc, 47320 CLAIRAC (FR)
(74) Mandataire: Ipside

(56) Documents cités:
- EP-A1- 3 025 940
- FR-A1- 2 979 322
- FR-A1- 3 031 069
- US-A1- 2015 102 568
- US-A1- 2015 291 233
- US-B1- 6 311 795

## Description

### Domaine de l'invention

La présente invention concerne un tracteur enjambeur à voie et hauteur réglables.

### Arrière plan technologique

La voie utile entre les jambes droites et gauches d'un tracteur enjambeur est une donnée importante pour son utilisation de même que la hauteur sous le tracteur.

Les tracteurs enjambeurs ont une largeur utile entre roues dépendant des équipements tels que freins, suspension et dispositifs de manœuvre de la direction des roues.

Le document US2015/291233 A1 décrit un véhicule qui comporte des supports de roues à quatre branches formant un parallélogramme déformable et qui comporte des moyens de réglage de la voie du véhicule.

### Brève description de l'invention

La présente invention propose un tracteur enjambeur à voie réglable comportant une cabine et un moteur montés sur un châssis dépourvu de roues, ces dernières étant portées par des bâtis support externes au châssis.

Plus précisément l'invention propose un 1 - Tracteur enjambeur (1) à voie (A) réglable comportant une cabine (30) et un moteur (31) montés sur un châssis (20),
Comportant des équipages mobiles de support des roues comportant des bras oscillants réalisés sous forme de parallélogrammes déformables longitudinaux (4a, 4b, 4c, 4d) disposés dans un plan vertical et qui supportent des jambes (7) porteuses des roues (40) du tracteur ;
comportant des bâtis latéraux (10) porteurs d'un ensemble latéral roue avant roue arrière du tracteur et comportant des poutres tubulaires (6a) qui traversent latéralement le châssis pour le solidariser aux bâtis latéraux (10) recevant les équipages mobiles du tracteur, les équipages mobiles reliant les jambes portes roues aux bâtis latéraux (10), et pour lequel les parallélogrammes sont constitués par une première branche (4a) au niveau d'un fourreau de réception de l'axe (41) de la jambe (7) porte roue, une deuxième branche (4b) partie d'un bâti latéral et deux branches de liaison (4c, 4d) longitudinales entre la branche partie du bâti et la branche (4a) porteuse de l'axe de roue, et pour lequel les branches de liaison (4c, 4d) sont articulées sur la branche (4a) porteuse de l'axe de la jambe et sur la branche (4b) partie du bâti, les branches de liaison longitudinales supérieures (4d) étant articulées sur des axes formés par des manchons (6b) recevant les poutres tubulaires (6b), les poutre tubulaires (6a) reçues dans les manchons (6b) solidaires des bâtis latéraux formant des axes transversaux (60) télescopiques de réglage de la largeur de voie du tracteur, des vérins (62, 63) de rapprochement ou d'éloignement des bâtis latéraux par rapport au châssis (20) du tracteur étant disposés entre le châssis et les bâtis latéraux.

Avantageusement, la suspension du tracteur est positionnée au dessus des bâtis, la suspension comportant des vérins qui s'accrochent d'une part sur le haut des bâtis et d'autre part sur des tiges solidaires de la branche supérieure longitudinale des parallélogrammes et qui forment des bras de levier autour des axes porteurs des branches de liaison supérieures pour relever et abaisser le châssis du tracteur relativement aux axes porteurs des roues et réaliser la suspension.

Les axes des jambes de roues sont préférablement actionnés en rotation par une biellette et un vérin hydraulique de direction qui comporte une première extrémité raccordée sur le bâti et une seconde extrémité actionnant la biellette en rotation.

Avantageusement, chaque roue est équipée d'un moteur hydraulique qui se fixe sur les jambes et dont la partie tournante est disposée dans le moyeu de la roue.

Les jambes de roues comportent préférablement un axe de direction situé au dessus de la roue, un montant formant la jambe disposé latéralement par rapport à la roue et portant au niveau du moyeu de la roue le moteur hydraulique et un tambour de frein.

La suspension du tracteur comporte avantageusement un vérin pour chaque roue, chaque vérin étant piloté par un distributeur proportionnel, les vérins d'un même essieu étant reliés à une ou plusieurs amortisseurs tels que des sphères azote et un dispositif répartiteur adapté à mettre en communication ou isoler lesdits vérins d'un même essieu, la suspension pilotée par un calculateur électronique permettant ainsi de réaliser des fonctions de hauteur réglable du tracteur, d'assiette réglable et de compensation de dévers et d'adaptation de l'amortissement de la suspension.

Les tubes des poutres tubulaires qui relient les bâtis gauche et droit au châssis reçoivent les fourreaux qui coulissent sur les tubes.

Des bagues de réduction de frottement telles que des bagues téflon sont avantageusement disposées entre les tubes et les fourreaux.

Selon un mode de réalisation avantageux, le fourreau traverse le bâti, est solidaire du bâti et constitue un axe d'articulation de la branche.

Selon un mode de réalisation particulier, l'articulation de la branche est avantageusement réalisée sur une portée du fourreau au moyen de roulements coniques reçus entre la portée et une cage externe soudée dans la branche.

Les tubes des poutres sont préférablement de longueur suffisante pour permettre un écartement maximal des bâtis donné par l'extension complète des tiges des vérins.

Selon un mode de réalisation particulier, le fourreau est rendu solidaire du bâti par serrage d'un écrou vissé sur une extrémité filetée du fourreau, les deux côtés du bâti étant serrés du fait de la présence d'épaulements annulaires entre le fourreau et le cylindre.

### Brève description des dessins

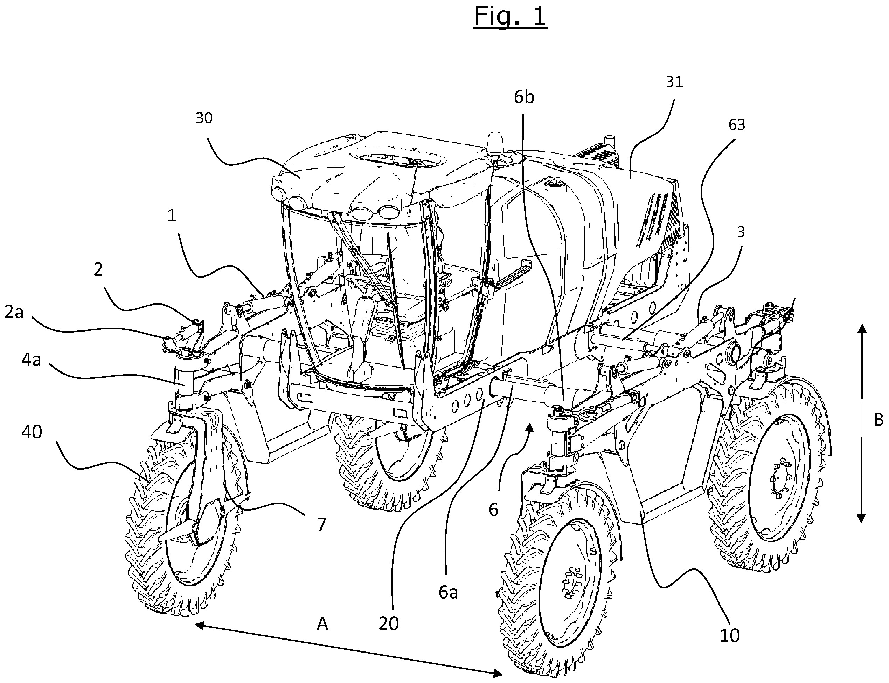

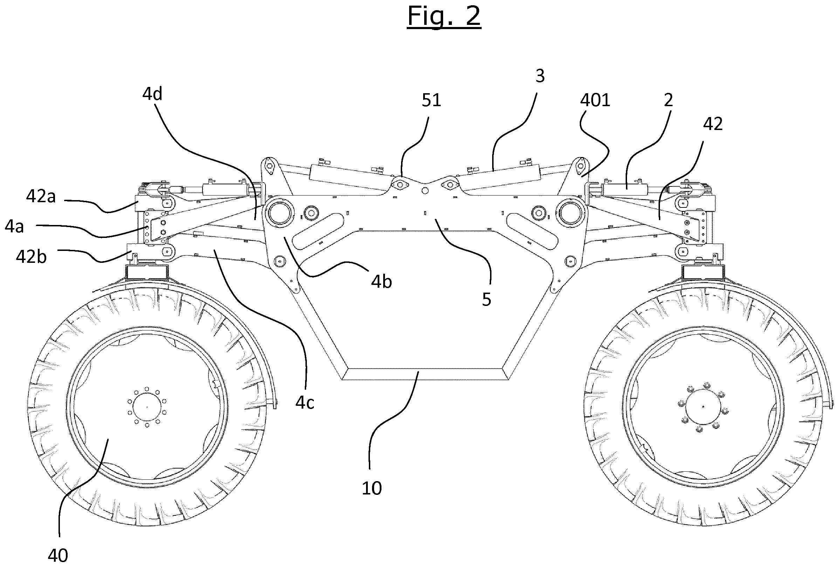

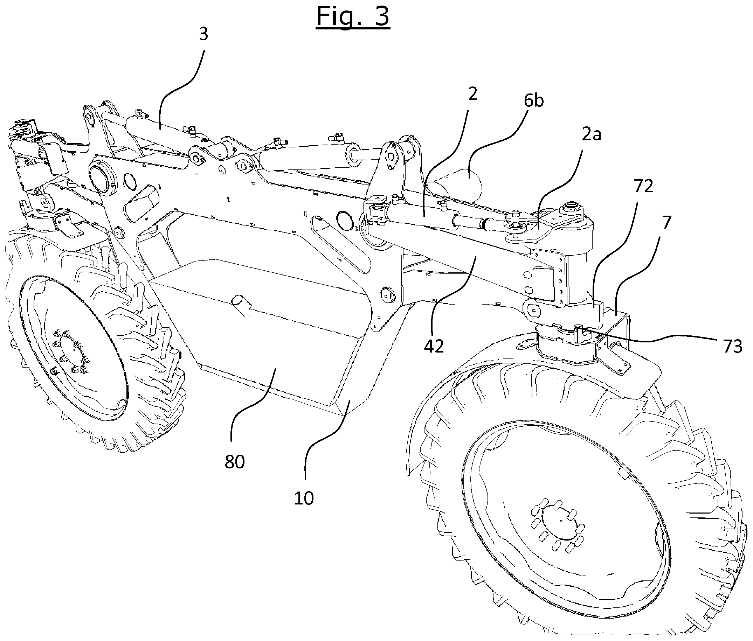

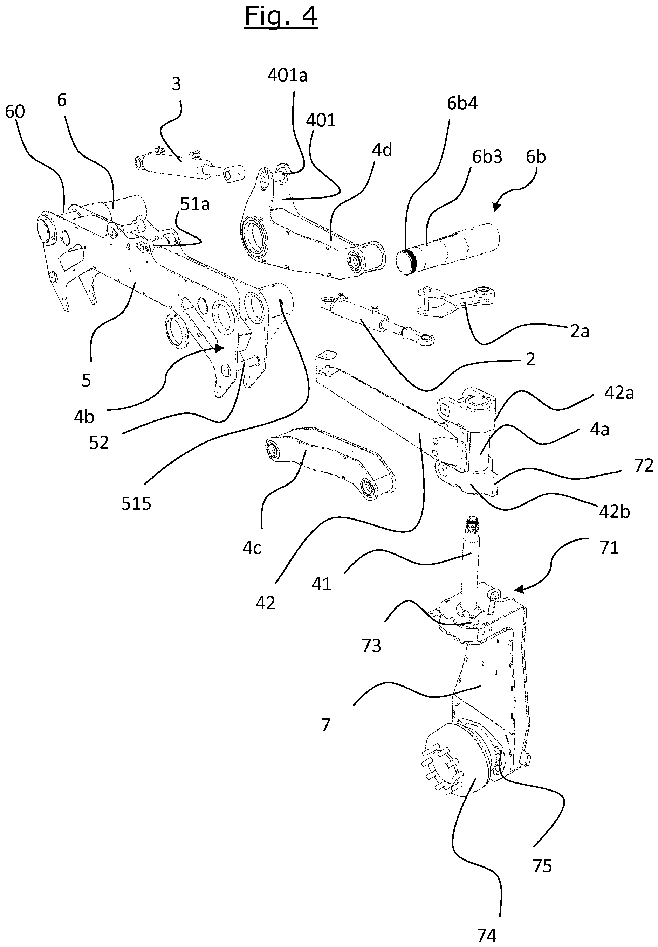

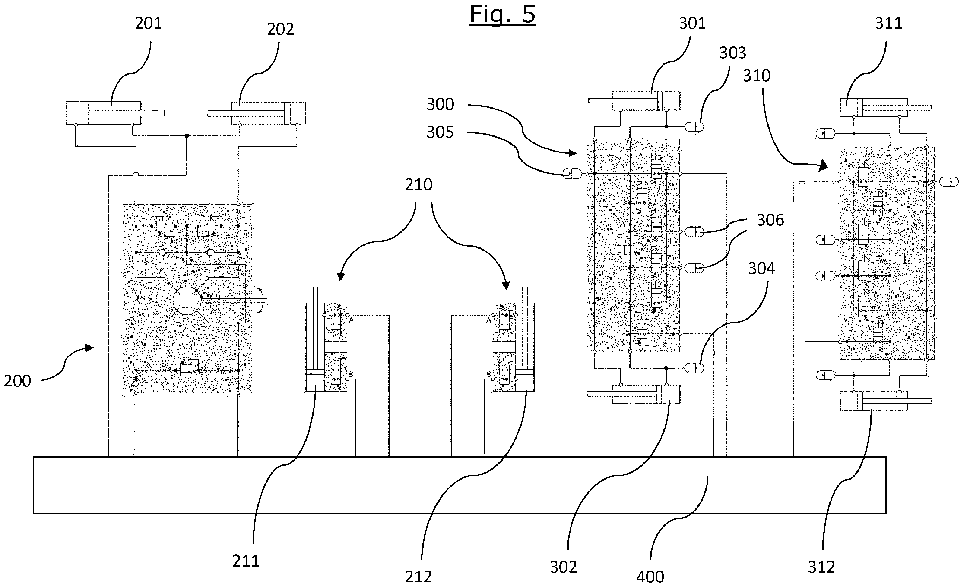

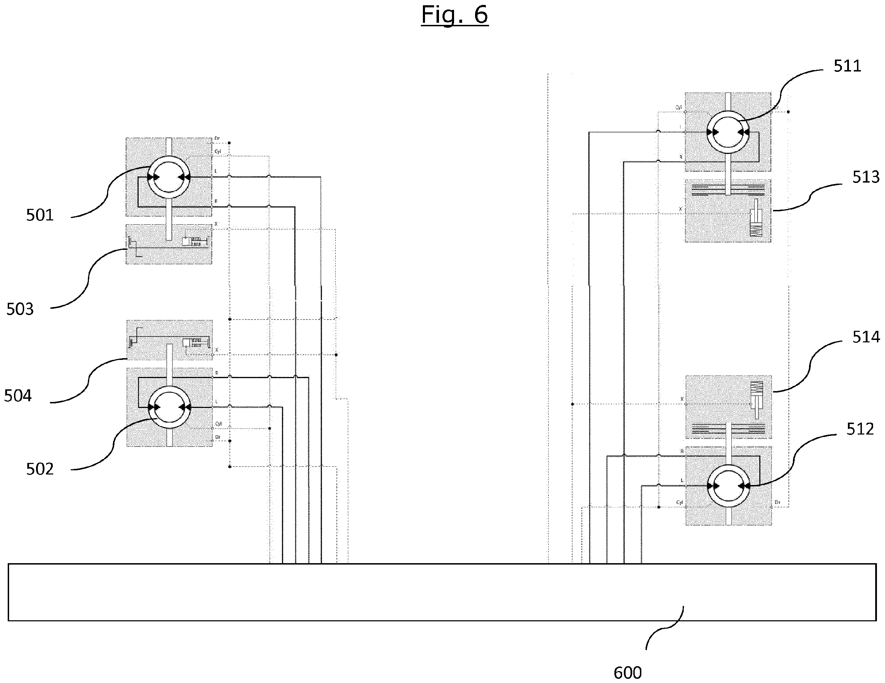

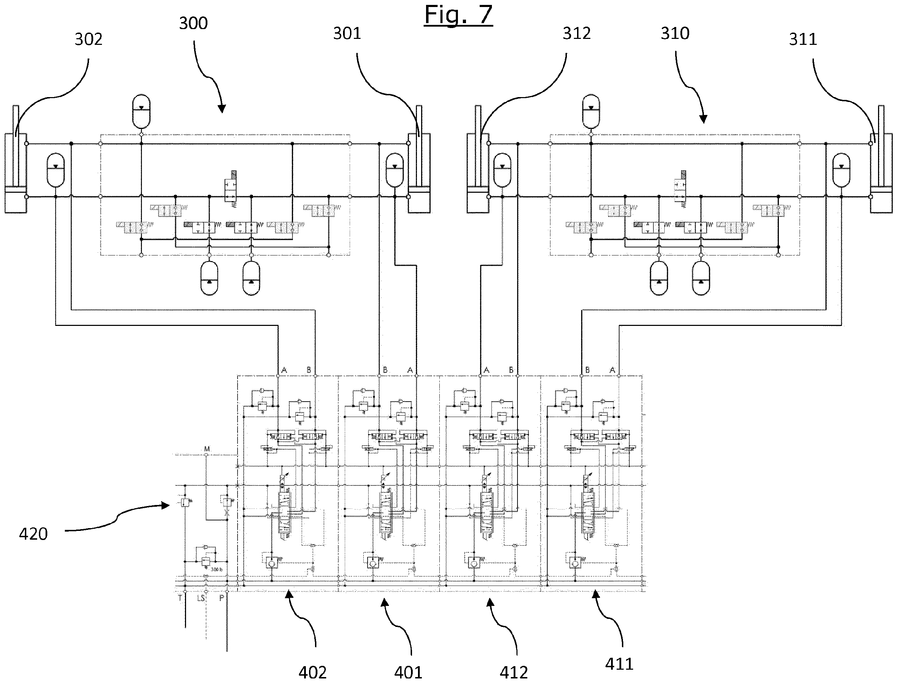

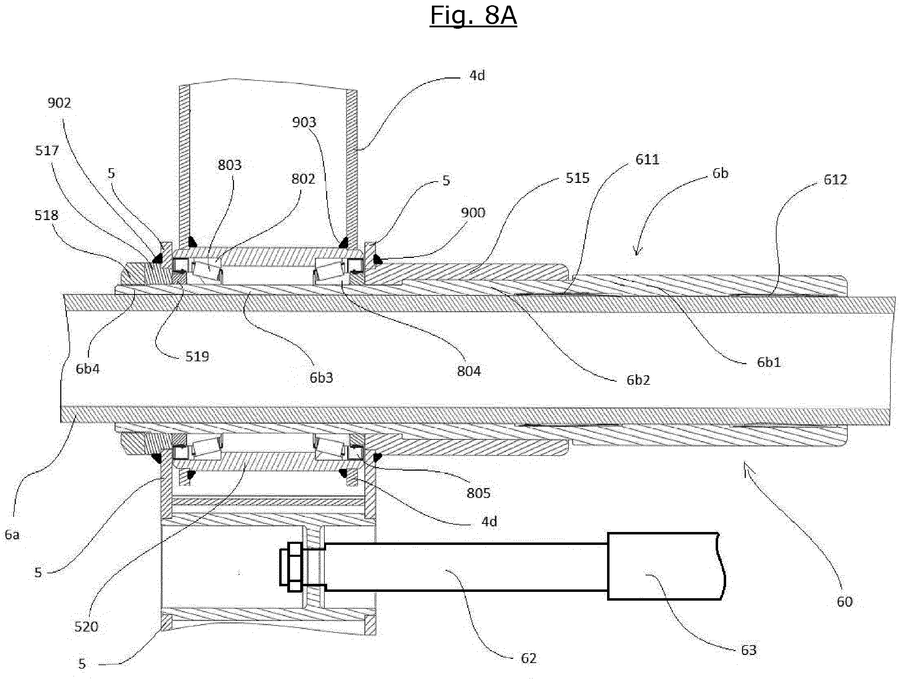

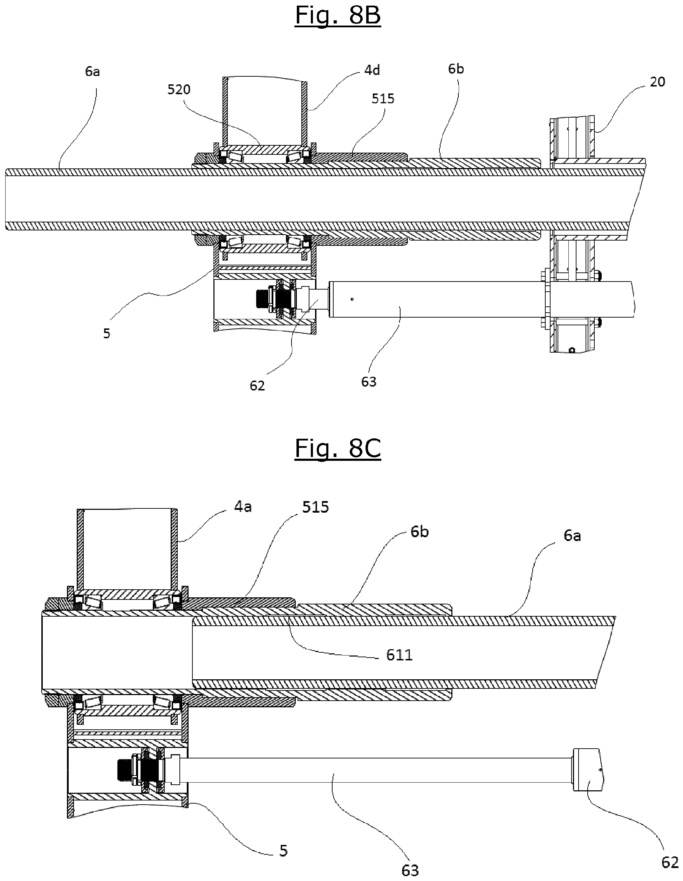

D'autres caractéristiques et avantages de l'invention seront apparents à la lecture de la description qui suit d'un exemple non limitatif de réalisation de l'invention en référence aux dessins qui représentent:
En figure 1: une vue en perspective de dessus d'un tracteur enjambeur de l'invention;
en figure 2: une vue de côté d'un bâti du tracteur de la figure 1;
en figure 3: une vue en perspective du bâti de la figure 2;
en figure 4: une vue éclatée d'un détail du bâti de la figure 2;
en figure 5: un schéma simplifié des équipements hydrauliques de direction et de suspension du tracteur;
en figure 6: un schéma simplifié des équipements moteurs et freins hydrauliques du tracteur;
en figure 7: un schéma plus détaillé des équipements de suspension hydraulique.
En figure 8A : une vue de dessus en coupe d'un détail d'une liaison entre un bâti latéral et une poutre tubulaire selon un aspect de l'invention.
Aux figures 8B et 8C: la vue de la figure 8A en positions respectivement bâti rétracté, bâti écarté.

### Description détaillée de modes de réalisation de l'invention

Selon la figure 1, la présente invention propose de réaliser un tracteur enjambeur 1 à voie A réglable. Un but de l'invention est de réduire au maximum les organes positionnés au niveau des roues du tracteur enjambeur 1 en sorte d'accroître l'espace disponible entre ces dernières.

Le tracteur enjambeur comporte une cabine 30 et un moteur 31 montés sur un châssis 20. Le châssis peut en outre supporter un réservoir pour le moteur, des accessoires pour le travail agricole comme des bras porte outils, un ou des réservoir de produits phytosanitaires ou autre équipements utiles au travail de la terre.

Les roues du tracteur sont portées par des bâtis latéraux 10 et des poutres tubulaires 6a qui traversent latéralement le châssis pour le solidariser avec les bâtis latéraux 10. Les poutres 6a sont reçues dans des manchons 6b solidaires des bâtis latéraux.

La voie du tracteur est réglable et pour ce faire, les manchons 6b coulissent sur les poutres 6a au moyen de vérins hydrauliques qui permettent de rapprocher ou d'éloigner les bâtis latéraux du châssis central du tracteur.

Les tubes formant les poutres 6a, et les manchons 6b forment des axes transversaux télescopiques 6 de réglage de la largeur de voie du tracteur et les extrémités des manchons 6b sont fixées sur les bâtis latéraux 10.

Les bâtis latéraux 10 reçoivent les équipages mobiles du tracteur. Les équipages mobiles comportent des bras oscillants qui supportent des jambes 7 porteuses des roues 40 du tracteur.

La figure 2 représente un des bâtis latéraux 10 vu de côté avec les bras oscillant et les jambes 7 porte roues 40. Chaque bâti est muni d'un ensemble latéral roue avant roue arrière.

Les bras oscillants sont réalisés sous forme de parallélogrammes déformables longitudinaux 4a, 4b, 4c, 4d disposés dans un plan vertical. Les parallélogrammes permettent de relier les jambes portes roues aux bâtis latéraux 10.

Les parallélogrammes plus particulièrement détaillés à la figure 4 comportent une première branche 4a constituée par un fourreau de réception d'un axe 41 de la jambe 7 porte roue, une deuxième branche 4b partie d'un bâti latéral 10 et deux branches de liaison 4c, 4d longitudinales entre la branche partie du bâti et la branche 4a porteuse de l'axe de roue.

La branche 4b fait partie d'une poutre supérieure 5 du bâti 10.

La branche 4a est constituée par un fourreau recevant l'axe de roue 41

Les branches de liaison 4c, 4d sont articulées sur la branche 4a au niveau de brides 42a, 42b en haut et en bas du fourreau 4a.

Au niveau du bâti, la branche supérieure 4d est articulée sur l'axe 60 formé par les manchons 6b recevant les poutres 6a et est articulée par rapport à la poutre supérieure 5 du bâti 10. La branche inférieure 4c est pour sa part articulée sur un axe rapporté 52 sur la poutre 5, l'entraxe entre les axes 60, vu sur la partie arrière du bâti et constitué par la portée 6b3 du manchon 6b, et 52 formant la branche verticale 4b du parallélogramme.

Un exemple de réalisation de la liaison entre un bâti latéral 5 et les axes transversaux 6 est représenté en figure 8A.

Le tube 6a, qui est le tube principal de la poutre et qui relie les bâtis gauche et droit au châssis 20, traverse les bâtis en position voie étroite du tracteur.

Pour écarter ou rapprocher les bâtis du châssis, des vérins 63, 63 sont disposés entre le châssis et les bâtis. Selon l'exemple la tige 62 se fixe sur le bâti latéral 10 et le fût 63 se fixe sur le châssis comme vu en figure 1.

Pour écarter ou rapprocher les bâtis, le fourreau 6b coulisse, avec l'aide des bagues de réduction de frottement telles que des bagues téflon 611, 612, sur le tube 6a qui traverse le bâti. Le manchon 6b est lui-même reçu dans un cylindre 515 soudé 900 au bâti et qui forme un renfort du bâti. Les tubes 6a et les fourreaux 6b forment un dispositif télescopique de réglage de la voie du tracteur.

Le tube 6a est de longueur suffisante pour permettre un écartement maximal des bâtis donné par l'extension complète de la tige 62 du vérin. Dans cette position dite voie élargie, l'extrémité du tube 6a vient à l'intérieur du manchon en porte à faux par rapport au bâti.

Le fourreau 6b est étagé et comporte une première section 6b1 d'un premier diamètre dit supérieur, une deuxième section 6b2 de diamètre intermédiaire, définissant entre la première section et cette deuxième section un premier épaulement annulaire, une troisième section 6b3 de diamètre réduit et une section terminale 6b4 filetée. La troisième section 6b3 définit entre la deuxième section et cette troisième section un second épaulement annulaire de butée avec un épaulement complémentaire d'un cylindre 515 dans lequel est inséré le fourreau, la troisième section constituant en outre une portée pour une paire de roulements 803.

Le fourreau est rendu solidaire du bâti 5 par serrage d'un écrou 518 sur une cale annulaire 517 aussi soudée 902 sur le bâti 5. L'écrou est vissé sur l'extrémité filetée 6b4 du fourreau 6b. Les deux côtés du bâti sont serrés par l'écrou 518 du fait de la présence d'épaulements annulaires entre le fourreau et le cylindre 515.

L'articulation de la branche 4d qui reçoit l'amortisseur de suspension 3 est réalisée sur le fourreau 6b et en particulier sur la troisième section 6b3 formant une portée des roulements usinée sur ce fourreau.

Cette articulation utilise une paire de roulements coniques 802, 803, 804 reçus entre la portée 6b3 et une cage externe 520 soudée 903 dans la branche 4d.

Les roulements sont précontraints au moyen de l'écrou 518, de bagues 519 et de portées annulaires internes à la cage externe 520 de manière traditionnelle.

Les figures 8B et 8C sont similaires à la figure 8A. La figure 8B montre la position du bâti 5 lorsque la voie est réduite, le bâti 5 étant alors rapproché du châssis 20 et le manchon 6b pratiquement contre le châssis, le tube 5a dépassant à l'extérieur du bâti. en positions respectivement bâti rétracté, bâti écarté. La figure 8C représente le bâti en position voie élargie. Dans cette position le tube 8a est en position rétractée par rapport au manchon 6b qui a coulissé vers l'extérieur sous l'action du vérin 62, 63. Cette position est similaire à celle représentée en figure 1.

Ce montage qui permet de regrouper en un seul ensemble l'articulation de la branche supérieure longitudinale 4d du parallélogramme de suspension qui forme le bras oscillant principal de la suspension des roues et la solidarisation des bâtis assure une grande rigidité à l'ensemble tout en le rendant compact.

Pour réduire l'encombrement au niveau des jambes du tracteur, la suspension du tracteur est déportée au dessus des bâtis 10. La suspension est réalisée par des vérins 3 qui s'accrochent d'une part sur des axes 51a portés par des oreilles 51 sur le haut des poutres 5 et d'autre part sur des axes 401a portés par des tiges 401 solidaires de la branche supérieure longitudinale 4d des parallélogrammes comme représenté en figure 4. Les vérins agissent sur les parallélogrammes et les variations de hauteur du tracteur sont réalisées par la déformation des parallélogrammes dont la géométrie permet de conserver verticaux les axes 41 des jambes porte roues lors du débattement de la suspension et des variations de hauteur du tracteur.

La tige 401 forme un premier bras d'un levier autour de l'axe 60 porteur de la branche de liaison supérieure 4d, qui forme le second bras du levier, pour relever et abaisser le châssis du tracteur relativement aux jambes et aux roues dans la direction B de la figure 1.

Les vérins 3 de réglage de hauteur du tracteur et de suspension sont des vérins hydrauliques permettant de réaliser la suspension par compression détente autour d'une position d'équilibre qui définit la hauteur du tracteur. Pour la suspension, le circuit hydraulique des vérins est relié à une ou plusieurs sphères accumulatrices comme représenté en figure 5.

Les axes 41 sont actionnés en rotation par un vérin de direction 2 et sont prolongés vers le bas par les jambes 7 sur lesquelles sont fixés les moyeux des roues. Selon la figure 4 chaque roue est équipé d'un moteur hydraulique 75 qui se fixe sur les jambes 7 et dont la partie tournante est disposée dans le moyeu de la roue.

Ce système à jambe de liaison unique est très favorable pour diminuer la largeur hors tout de l'ensemble: l'axe 41 est situé au dessus de la roue et la jambe déportée 7 est reliée audit axe et au moyeu de la roue. Le moyeu de la roue porte le moteur hydraulique 75 et le tambour de frein 74 alors que le dispositif de la direction 2 et les dispositifs de suspension 3, 4a, 4b, 4c, 4d sont déportés au dessus des axes de roues.

En outre, la jambe 7 est creuse et comporte une ouverture 71 de passage des flexibles hydrauliques du moteur hydraulique et des freins ce qui les protège.

Toujours selon la figure 4, les axes 41 des jambes de roues sont articulés en rotation à une extrémité des parallélogrammes pour permettre de rendre les roues directionnelles.

Ils sont reçus dans un fourreau formant la branche 4a du parallélogramme pourvue des brides 42a; 42b. En partie supérieure de l'axe 41 est fixée une biellette 2a destinée à faire tourner l'axe 41 dans le fourreau pour réaliser la direction.

Pour ce faire, la biellette 2a et manœuvrée par un vérin hydraulique 2 qui comporte une première extrémité raccordée sur un bras 42 et une seconde extrémité actionnant la biellette 2a en rotation.

Un doigt 72 entre des butées 73 limite les possibilités de rotation des jambes 7 portant les roues.

Le circuit hydraulique du tracteur est partiellement représenté en figure 5.

Dans le mode de réalisation présenté, toutes les roues sont directionnelles ce qui donne une grande agilité au tracteur.

Le tracteur comporte un combiné suspension/réglage de hauteur réalisé par les vérins 3 qui font office de suspension et de réglage de hauteur du tracteur.

Pour encore réduire la largeur des ensembles de roues, les freins sont disposés à l'intérieur du moyeu de la roue et protégés par ce dernier.

Pour leur part les bâtis 10 tels que représentés en figure 3 forment des cadres qui peuvent recevoir un coffre de rangement ou un réservoir 80 pour des produits phytosanitaires ou autres.

La figure 5 représente schématiquement une partie du circuit hydraulique d'un tracteur selon l'invention pour ce qui concerne le réglage de hauteur du tracteur et sa direction.

La direction avant comporte un dispositif répartiteur 200 adapté à commander en combinaison les vérins de direction avant 201, 202. La direction arrière comporte deux vérins 211, 212 agissant sur les roues arrière en réponse à la position des roues avant pour rendre le tracteur plus maniable.

Le dispositif combiné suspension/réglage de hauteur comporte des vérins de suspension avant droit 301 et avant gauche 302 et des vérins de suspension arrière droit 311 et arrière gauche 312.

L'amortissement de la suspension en compression est ici réalisée au moyen d'amortisseurs de type sphères azote 303, 304. Des sphères azotes supplémentaires 305 communes aux deux vérins d'un essieu assurent selon le cas un amortissement en détente. Pour offrir un amortissement plus souple des sphères supplémentaires 306 peuvent être reliées au circuit des sphères 303 et 304 au moyen d'un dispositif répartiteur ou bloc hydraulique 300 de mise en communication ou de séparation des circuits des vérins droit et gauche d'un même essieu. Le dispositif 300 comporte des électrovannes disposées de façon à permettre la mise en pression des vérins, les séparer, les relier, ouvrir ou fermer les circuits alimentant les sphères 306 selon la ou les fonctions mises en œuvre.

La suspension arrière comporte de la même manière des sphères et un dispositif répartiteur 310 de mise en communication ou de séparation des circuits des vérins droit 311 et gauche 312 arrières.

L'ensemble des organes hydrauliques sont reliés à un circuit de commande et distribution 400 qui est représenté à la figure 7.

Chaque vérin de suspension est piloté à partir d'un distributeur proportionnel, distributeur 401 pour le vérin avant droit 301, distributeur 402 pour le vérin avant gauche 302, distributeur 411 pour le vérin arrière droit 311 et distributeur 412 pour le vérin arrière gauche 312. Les distributeurs proportionnels sont pilotés par un calculateur électronique, non représenté pour ne pas surcharger le schéma, au moyen de signaux PWM de manière connue en soi. Les distributeurs proportionnels sont alimentés en pression hydraulique par un bloc d'alimentation 420 commun relié aux pompes hydrauliques.

La commande en parallèle des distributeurs va permettre de réaliser des fonctions de réglage de hauteur, une fonction anti-dévers et une fonction de correction d'assiette au moyen de capteurs tel qu'un accéléromètre un inclinomètre et éventuellement d'un calculateur électronique.

Le calculateur pilote aussi les dispositifs répartiteurs 300, 310 en fonction du mode de fonctionnement choisi, roues indépendantes, anti-dévers, essieu rigide, correction d'assiette en couplant dans ce dernier cas les réglages avant arrière ou en effectuant d'autre réglage selon la configuration du terrain.

La commande séparée des vérins de suspension 301, 302, 311, 312 par des distributeurs proportionnels dédiés 401, 402, 411, 412 et la présence de dispositifs répartiteurs 300, 310 permettant la séparation ou la mise en communication des vérins d'un même essieu permettent d'adapter la suspension à de multiples situations selon la configuration du terrain sur lequel se déplace le tracteur et un confort important de l'opérateur.

La figure 6 représente pour sa part un schéma simplifié de moteurs hydrauliques et des freins d'un tracteur selon l'invention.

Les moteurs avant droit 501 et gauche 502 sont couplés à des freins à tambour 503, 504 alors que les moteurs arrière droit 511 et arrière gauche 512 sont équipés de freins de parc 513, 514.

Comme pour la suspension/direction les moteurs et les freins sont commandés par des systèmes de distribution alimentation de type connu et alimentés par des pompes entraînées par un moteur thermique. Pour donner un ordre d'idée, le moteur thermique peut être un moteur diesel d'une puissance de 100 à 150 kWh et les pompes des pompes d'une cylindrée entre 50cm³ et 100cm³ et capables de délivrer une puissance de 400 bars à 500 bars.

Les moteurs hydrauliques peuvent par exemple être des moteurs de type MSE08 de la société Poclain. Il est notamment possible d'utiliser une pompe hydraulique pour alimenter les moteurs des roues avant et une pompe hydraulique pour alimenter les moteurs des roues arrières.

L'invention définie par les revendications annexées n'est pas limitée à l'exemple représenté et notamment les suspensions peuvent être pilotées électroniquement pour faire varier leur raideur en jouant sur le nombre de sphères reliées au circuit hydraulique, les sphères pouvant être mise en ou hors circuit au moyen d' électrovannes.

## Revendications

1. Tracteur enjambeur (1) à voie (A) réglable comportant une cabine (30) et un moteur (31) montés sur un châssis (20), comportant des équipages mobiles de support des roues comportant des bras oscillants réalisés sous forme de parallélogrammes déformables longitudinaux (4a, 4b, 4c, 4d) disposés dans un plan vertical et qui supportent des jambes (7) porteuses des roues (40) du tracteur ;
**caractérisé en ce qu'**il comporte des bâtis latéraux (10) porteurs d'un ensemble latéral roue avant roue arrière du tracteur et comportant des poutres tubulaires (6a) qui traversent latéralement le châssis pour le solidariser aux bâtis latéraux (10) recevant les équipages mobiles du tracteur, les équipages mobiles reliant les jambes portes roues aux bâtis latéraux (10), et **en ce que** les parallélogrammes sont constitués par une première branche (4a) au niveau d'un fourreau de réception de l'axe (41) de la jambe (7) porte roue, une deuxième branche (4b) partie d'un bâti latéral et deux branches de liaison (4c, 4d) longitudinales entre la branche partie du bâti et la branche (4a) porteuse de l'axe de roue, et pour lequel les branches de liaison (4c, 4d) sont articulées sur la branche (4a) porteuse de l'axe de la jambe et sur la branche (4b) partie du bâti, les branches de liaison longitudinales supérieures (4d) étant articulées sur des axes formés par des manchons (6b) recevant les poutres tubulaires (6b), les poutre tubulaires (6a) reçues dans les manchons (6b) solidaires des bâtis latéraux formant des axes transversaux (60) télescopiques de réglage de la largeur de voie du tracteur, des vérins (62, 63) de rapprochement ou d'éloignement des bâtis latéraux par rapport au châssis (20) du tracteur étant disposés entre le châssis et les bâtis latéraux.

2. Tracteur enjambeur selon la revendication 1, pour lequel la suspension du tracteur est positionnée au dessus des bâtis (10), la suspension comportant des vérins (3) qui s'accrochent d'une part sur le haut des bâtis et d'autre part sur des tiges (401) solidaires de la branche supérieure longitudinale (4d) des parallélogrammes et qui forment des bras de levier autour des axes (60) porteurs des branches de liaison supérieures (4d) pour relever et abaisser le châssis du tracteur relativement aux axes porteurs des roues et réaliser la suspension.

3. Tracteur enjambeur selon l'une quelconque des revendications précédentes pour lequel les axes (4a) des jambes de roues sont actionnés en rotation par une biellette (2a) et un vérin hydraulique de direction (2) qui comporte une première extrémité raccordée sur le bâti et une seconde extrémité actionnant la biellette en rotation.

4. Tracteur enjambeur selon l'une quelconque des revendications précédentes pour lequel chaque roue est équipée d'un moteur hydraulique (43) qui se fixe sur les jambes (7) et dont la partie tournante est disposée dans le moyeu de la roue.

5. Tracteur enjambeur selon la revendication 4 pour lequel les jambes de roues comportent un axe (4a) de direction situé au dessus de la roue, un montant formant la jambe (7) disposé latéralement par rapport à la roue et portant au niveau du moyeu de la roue le moteur hydraulique (75) et un tambour de frein (74).

6. Tracteur enjambeur selon l'une quelconque des revendications précédentes pour lequel la suspension du tracteur comporte un vérin (301, 302, 311, 312) pour chaque roue, chaque vérin étant piloté par un distributeur proportionnel (401, 402, 411, 412), les vérins d'un même essieu étant reliés à une ou plusieurs amortisseurs tels que des sphères azote (303, 304, 305, 306) et un dispositif répartiteur (300, 310) adapté à mettre en communication ou isoler lesdits vérins d'un même essieu, la suspension pilotée par un calculateur électronique permettant ainsi de réaliser des fonctions de hauteur réglable du tracteur, d'assiette réglable et de compensation de dévers et d'adaptation de l'amortissement de la suspension.

7. Tracteur enjambeur selon l'une quelconque des revendications précédentes pour lequel les tubes des poutres tubulaires (6a) qui relient les bâtis gauche et droit au châssis (20) reçoivent les fourreaux (6b) qui coulissent sur les tubes (6a).

8. Tracteur enjambeur selon l'une quelconque des revendications précédentes pour lequel des bagues de réduction de frottement telles que des bagues téflon (611, 612) sont disposées entre les tubes (6a) et les fourreaux (6b).

9. Tracteur enjambeur selon la revendication 7 ou 8 pour lequel le fourreau (6b) traverse le bâti, est solidaire du bâti et constitue un axe d'articulation de la branche (4d).

10. Tracteur enjambeur selon la revendication 9 pour lequel l'articulation de la branche (4d) est réalisée sur une portée (6b3) du fourreau au moyen de roulements coniques (802, 803, 804) reçus entre la portée (6b3) et une cage externe (520) soudée dans la branche (4d).

11. Tracteur enjambeur selon l'une quelconque des revendications précédentes pour lequel les tubes (6a) des poutres sont de longueur suffisante pour permettre un écartement maximal des bâtis donné par l'extension complète des tiges (62) des vérins.

12. Tracteur enjambeur selon l'une quelconque des revendications 7 à 10 pour lequel le fourreau (6b) est rendu solidaire du bâti (5) par serrage d'un écrou (518) vissé sur une extrémité filetée (6b4) du fourreau (6b), les deux côtés du bâti étant serrés du fait de la présence d'épaulements annulaires entre le fourreau (6b) et le cylindre (515).

## Patentansprüche

1. Stelzentraktor (1) mit einstellbarer Spur (A), der eine Kabine (30) und einen Motor (31) beinhaltet, die auf einem Fahrwerk (20) montiert sind, bewegliche Radträgersysteme beinhaltend, die Schwingarme beinhalten, die in Form von länglichen verformbaren Parallelogrammen (4a, 4b, 4c, 4d) realisiert sind, die in einer vertikalen Ebene angeordnet sind und die die Stützbeine (7) der Räder (40) des Traktors tragen;
**dadurch gekennzeichnet, dass** er seitliche Stützgestelle (10) für eine seitliche Einheit aus Vorderrad Hinterrad des Traktors beinhaltet und rohrförmige Holme (6a) beinhaltet, die das Fahrwerk seitlich durchqueren, um es fest mit den seitlichen Gestellen (10) zu verbinden, die die beweglichen Systeme des Traktors aufnehmen, wobei die beweglichen Systeme die Radstützbeine mit den seitlichen Gestellen (10) verbinden, und dadurch, dass die Parallelogramme durch einen ersten Schenkel (4a) im Bereich einer Aufnahmehülse der Achse (41) des Radstützbeins (7), einen zweiten Schenkel (4b), der Teil eines seitlichen Gestells ist, und zwei längliche Verbindungsschenkel (4c, 4d) zwischen dem Schenkel, der Teil des Gestells ist, und dem Stützschenkel (4a) der Radachse gebildet werden, und bei dem die Verbindungsschenkel (4c, 4d) an dem Stützschenkel (4a) der Achse des Schenkels und an dem Schenkel (4b), der Teil eines Gestells ist, angelenkt sind, wobei die oberen länglichen Verbindungsschenkel (4d) an den Achsen angelenkt sind, die durch Muffen (6b) gebildet werden, die die rohrförmigen Holme (6b) aufnehmen, wobei die rohrförmigen Holme (6a), die in den Muffen (6b) aufgenommen werden, die fest mit den seitlichen Gestellen verbunden sind, die teleskopische Querachsen (60) zum Einstellen der Spurbreite des Traktors bilden, wobei Zylinder (62, 63) zum Annähern oder Entfernen der seitlichen Gestelle in Bezug auf das Fahrwerk (20) des Traktors zwischen dem Fahrwerk und den seitlichen Gestellen angeordnet sind.

2. Stelzentraktor nach Anspruch 1, wobei die Aufhängung des Traktors oberhalb der Gestelle (10) positioniert ist, wobei die Aufhängung Zylinder (3) beinhaltet, die einerseits an der Oberseite der Gestelle, und andererseits an den Stangen (401) eingehängt sind, die fest mit dem oberen länglichen Schenkel (4d) der Parallelogramme verbunden sind, und die Hebelarme um die Stützachsen (60) der oberen Verbindungsschenkel (4d) herum bilden, um das Fahrwerk des Traktors in Bezug auf die Stützachsen der Räder anzuheben und abzusenken und die Aufhängung zu realisieren.

3. Stelzentraktor nach einem der vorstehenden Ansprüche, wobei die Achsen (4a) der Radschenkel durch ein Schaltgestänge (2a) und einen hydraulischen Lenkzylinder (2) in Drehung versetzt werden, der ein erstes Ende beinhaltet, das an dem Gestell angeschlossen ist, und ein zweites Ende, das das Schaltgestänge in Drehung versetzt.

4. Stelzentraktor nach einem der vorstehenden Ansprüche, wobei jedes Rad mit einem Hydraulikmotor (43) ausgestattet ist, der an den Beinen (7) befestigt wird, und dessen drehender Teil in der Nabe des Rades angeordnet ist.

5. Stelzentraktor nach Anspruch 4, wobei die Radbeine eine Lenkachse (4a) beinhalten, die sich oberhalb des Rades befindet, eine Stütze, die das Bein (7) bildet, die in Bezug auf das Rad seitlich angeordnet ist, und im Bereich der Nabe des Rades den Hydraulikmotor (75) und eine Bremstrommel (74) stützt.

6. Stelzentraktor nach einem der vorstehenden Ansprüche, wobei die Aufhängung des Traktors einen Zylinder (301, 302, 311, 312) für jedes Rad beinhaltet, wobei jeder Zylinder durch ein Proportionalventil (401, 402, 411, 412) angesteuert wird, wobei die Zylinder einer selben Achse mit einem oder mehreren Stoßdämpfern, wie Stickstoffsphären (303, 304, 305, 306) und einer Verteilervorrichtung (300, 310) verbunden sind, die ausgeführt ist, um die Zylinder einer selben Achse miteinander kommunizieren zu lassen oder zu isolieren, wobei die durch einen elektronischen Rechner angesteuerte Aufhängung es somit ermöglicht, Funktionen einer einstellbaren Höhe des Traktors, einer einstellbaren Längsneigung und eines Überhöhungsausgleichs und einer Anpassung der Dämpfung der Aufhängung zu realisieren.

7. Stelzentraktor nach einem der vorstehenden Ansprüche, wobei die Rohre der rohrförmigen Holme (6a), die das linke und rechte Gestell mit dem Fahrwerk (20) verbinden, die Hülsen (6b) aufnehmen, die sich auf den Rohren (6a) verschieben.

8. Stelzentraktor nach einem der vorstehenden Ansprüche, wobei Reibungsminderungsringe, wie Teflonringe (611, 612), zwischen den Rohren (6a) und den Hülsen (6b) angeordnet sind.

9. Stelzentraktor nach Anspruch 7 oder 8, wobei die Hülse (6b) das Gestell durchquert, fest mit dem Gestell verbunden ist und eine Gelenkachse des Schenkels (4d) bildet.

10. Stelzentraktor nach Anspruch 9, wobei das Gelenk des Schenkels (4d) auf einer Auflagefläche (6b3) der Hülse anhand von Kegelrollenlagern (802, 803, 804) realisiert wird, die zwischen der Auflagefläche (6b3) und einem äußeren Käfig (520) aufgenommen sind, der in dem Schenkel (4d) verschweißt ist.

11. Stelzentraktor nach einem der vorstehenden Ansprüche, wobei die Rohre (6a) der Holme von ausreichender Länge sind, um eine maximale Entfernung der Gestelle, die durch die vollständige Ausdehnung der Stangen (62) der Zylinder gegeben ist, zu ermöglichen.

12. Stelzentraktor nach einem der Ansprüche 7 bis 10, wobei die Hülse (6b) durch Festziehen einer Mutter (518) fest mit dem Gestell (5) verbunden wird, die auf ein Gewindeende (6b4) der Hülse (6b) geschraubt ist, wobei die beiden Seiten des Gestells durch die Präsenz ringförmiger Absätze zwischen der Hülse (6b) und dem Zylinder (515) festgezogen werden.

## Claims

1. A high-clearance tractor (1) with adjustable track (A) including a cabin (30) and a motor (31) mounted on a chassis (20), including mobile equipment for supporting the wheels including oscillating arms produced in the form of longitudinal deformable parallelograms (4a, 4b, 4c, 4d) disposed in a vertical plane and which support struts (7) carrying the wheels (40) of the tractor;
**characterised in that** it includes lateral frames (10) carrying a front wheel rear wheel lateral assembly of the tractor and including tubular beams (6a) which laterally traverse the chassis to secure it to the lateral frames (10) receiving the mobile equipment of the tractor, the mobile equipment connecting the wheel-carrier struts to the lateral frames (10), and **in that** the parallelograms consist of a first branch (4a) at a socket for receiving the shaft (41) of the wheel carrier strut (7), a second branch (4b) part of a lateral frame and two longitudinal connecting branches (4c, 4d) between the branch part of the frame and the wheel shaft carrier branch (4a), and for which the connecting branches (4c, 4d) are hinged on the strut shaft carrier branch (4a) and on the branch (4b) part of the frame, the upper longitudinal connecting branches (4d) being hinged on shafts formed by sleeves (6b) receiving the tubular beams (6b), the tubular beams (6a) received in the sleeves (6b) secured to the lateral frames forming telescopic transverse shafts (60) for adjusting the track width of the tractor, cylinders (62, 63) for bringing the side frames closer or further away from the chassis (20) of the tractor being disposed between the chassis and the lateral frames.

2. The high-clearance tractor according to claim 1, for which the suspension of the tractor is positioned above the frames (10), the suspension including cylinders (3) which are hooked on the one hand on the top of the frames and on the other hand on rods (401) secured to the longitudinal upper branch (4d) of the parallelograms and which form lever arms around the shafts (60) carrying the upper connecting branches (4d) for raising and lowering the chassis of the tractor relative to the wheel carrier shafts and make the suspension.

3. The high-clearance tractor according to any one of the preceding claims for which the wheel strut shafts (4a) are actuated in rotation by a tie-rod (2a) and a hydraulic steering cylinder (2) which includes a first end connected to the frame and a second end actuating the tie-rod in rotation.

4. The high-clearance tractor according to any one of the preceding claims for which each wheel is equipped with a hydraulic motor (43) which is fixed on the struts (7) and whose rotating part is disposed in the hub of the wheel.

5. The high-clearance tractor according to claim 4 for which the wheel struts include a steering shaft (4a) located above the wheel, an upright forming the strut (7) disposed laterally relative to the wheel and carrying at the wheel hub the hydraulic motor (75) and a brake drum (74) .

6. The high-clearance tractor according to any one of the preceding claims for which the suspension of the tractor includes a cylinder (301, 302, 311, 312) for each wheel, each cylinder being controlled by a proportional distributor (401, 402, 411, 412), the cylinders of the same axle being connected to one or more dampers such as nitrogen spheres (303, 304, 305, 306) and a distributor device (300, 310) adapted to communicate or isolate said cylinders of a same axle, the suspension controlled by an electronic computer, thus allowing to perform functions of adjustable height of the tractor, adjustable attitude and tilt compensation and adaptation of the damping of the suspension.

7. The high-clearance tractor according to any one of the preceding claims for which the tubes of the tubular beams (6a) which connect the left and right frames to the chassis (20) receive the sockets (6b) which slide on the tubes (6a) .

8. The high-clearance tractor according to any one of the preceding claims for which friction reduction rings such as teflon rings (611,612) are disposed between the tubes (6a) and the sockets (6b).

9. The high-clearance tractor according to claim 7 or 8 for which the socket (6b) passes through the frame, is secured to the frame and constitutes a hinge axis of the branch (4d).

10. The high-clearance tractor according to claim 9 for which the hinge of the branch (4d) is formed on a bearing surface (6b3) of the socket by means of tapered roller bearings (802, 803, 804) received between the bearing surface (6b3) and an external cage (520) welded in the branch (4d).

11. The high-clearance tractor according to any one of the preceding claims for which the tubes (6a) of the beams are of sufficient length to allow a maximum spacing of the frames given by the complete extension of the rods (62) of the cylinders.

12. The high-clearance tractor according to any one of claims 7 to 10 for which the socket (6b) is secured the frame (5) by tightening a nut (518) screwed onto a threaded end (6b4) of the socket (6b), the two sides of the frame being tightened due to the presence of annular shoulders between the socket (6b) and the cylinder (515).
